# EUROPÄISCHE PATENTSCHRIFT

(11) **EP 0 496 976 B1**
(45) Veröffentlichungstag und Bekanntmachung des Hinweises auf die Patenterteilung: **06.07.1994**
(21) Anmeldenummer: 91120477.4
(22) Anmeldetag: 29.11.1991
(51) Int. Cl.: B64C 1/14, E05B 17/00

(54) **Vorrichtung zum Ver- und Entriegeln einer Klappe**
Device to lock and unlock a panel
Dispositif pour verrouiller et déverrouiller une trappe

(30) Priorität: 26.01.1991 DE 4102272
(43) Veröffentlichungstag der Anmeldung: 05.08.1992
(73) Patentinhaber: Daimler-Benz Aerospace Airbus Gesellschaft mit beschränkter Haftung, 21129 Hamburg (DE)
(72) Erfinder: Allerding, Volker, W-2800 Bremen (DE); Teichmann, Torsten, W-2800 Bremen (DE)
(74) Vertreter: Hansmann, Dierk, Dipl.-Ing.

(56) Entgegenhaltungen:
- FR-A- 2 311 672
- US-A- 3 240 523

## Beschreibung

Die Erfindung bezieht sich auf eine Vorrichtung zum Ver- und Entriegeln einer schwenkbaren Klappe, vorzugsweise einer im Deck eines Passagierraumes einer Verkehrsflugzeuges angeordneten und zu einem Fracht- oder Aufenthaltsraum im Unterflurbereich führenden Klappe, in deren Bereich ein Lagerbock mit einem daran angelenkten Winkelhebel angeordnet ist und bei der ein Hebelarm des Winkelhebels als Handhabe ausgebildet ist.

Klappen und Vorrichtungen zum Ver- und Entriegeln sind in zahlreichen Varianten bekannt. Bei Luftfahrzeugen, insbesondere Verkehrsflugzeugen, wird aber verlangt, solche Klappen einerseits sicher zu verschließen und andererseits auch gegen zusätzliche Schließlasten einwandfrei öffnen zu können. Solche Forderungen bestehen z.B. bei für Langstreckenflüge einsetzbaren Verkehrsflugzeugen, bei denen zusätzliche Piloten oder Bedienungspersonal in durch Klappen zugänglichen Aufenthaltsräumen unterhalb des Passagierdecks mitreisen. Im Bedarfsfall können diese Mannschaftsmitglieder den oder die Aufenthaltsräume über die vorgesehene Klappe verlassen. Dies ist aber nur dann möglich, wenn die im Regelfall in einem Gang vorgesehene Klappe frei ist, d.h. durch irgendwelche Passagiere oder Mannschaftsmitglieder nicht blockiert wird.

Aus der US-A 3,240,523 ist eine Verriegelungseinrichtung für Klappen von Lastkraftwagen bekannt. An der Außenseite der Klappe ist hierzu ein Lagerbock angeordnet, in dessen Bereich ein Hebel schwenkbar gelagert ist. Der Hebel greift in einer verriegelten Positionierung in ein Arretierungselement ein, das mit einer Wandung eines Frachtraumes des Lastkraftwagens verbunden ist. Bei einer Durchführung einer Öffnungsbewegung rutscht der Hebel zunächst entlang einer Gleitfläche aus dem Bereich des Arretierungselementes heraus. Aufgrund einer abgewinkelten Gestaltung des Hebels wird hierdurch quer zu einer Außenfläche der Klappe eine Öffnungskraft erzeugt, die die Klappe, die mit einer angepaßten Dichtung in eine Öffnung des Frachtraumes eingesetzt ist, aus der Öffnung herausdrückt.

Der Erfindung liegt daher die Aufgabe zugrunde, eine Vorrichtung zum Ver- und Entriegeln einer Klappe zu schaffen, die auch im blockierten Fall eine Öffnung gestattet.

Diese Aufgabe ist gemäß der Erfindung dadurch gelöst, daß der andere Hebelarm an seinem Ende eine Rolle aufweist, die in der Schließstellung in ein vorgespanntes, die Rolle umfassendes Riegelelement eingreift und beim Öffnen der Klappe nach dem Überwinden der Riegelvorspannung an einer Stützkante abrollbar ist und daß die Klappe in den Passagierraum schwenkbar ist.

Die erfindungsgemäße Maßnahme hat den Vorteil, daß die Klappe auch im blockierten Fall geöffnet werden kann. Beim Öffnen wird zunächst der Hebelarm mit der Rolle aus dem Riegelelement durch Überwinden der Vorspannung, und zwar durch Schwenken der Handhabe, herangerollt, was ohne jede Öffnungsbewegung der Klappe erfolgt. Nach dem Überwinden der Riegelvorspannung kann die Klappe durch Hochschwenken geöffnet werden. Sollte die Klappe zufällig durch einen Passagier oder ein Mitglied der Mannschaft blockiert sein, dann kann durch Abrollen der Rolle auf der Stützkante ohne nennenswerte auf die Handhabe aufzubringende Kraft die Klappe zumindest soweit geöffnet werden, daß die blockierende Person die Öffnungsabsicht merkt und die Blockade beendet.

Weiterbildungen und vorteilhafte Ausgestaltungen der Erfindung sind den Ansprüchen 2 bis 5 zu entnehmen.

Die Erfindung wird anhand der beiliegenden Zeichnung näher erläutert. Es zeigen:
- Fig.1: das Prinzip einer geschlossenen und verriegelten Klappe,
- Fig. 2: einen Entriegelungsvorgang einer Klappe,
- Fig. 3: eine entriegelte Klappe,
- Fig. 4: eine entriegelte um einen bestimmten Winkel verschwenkte, noch blockierte Klappe und
- Fig. 5: eine Ansicht V gemäß Fig. 1.

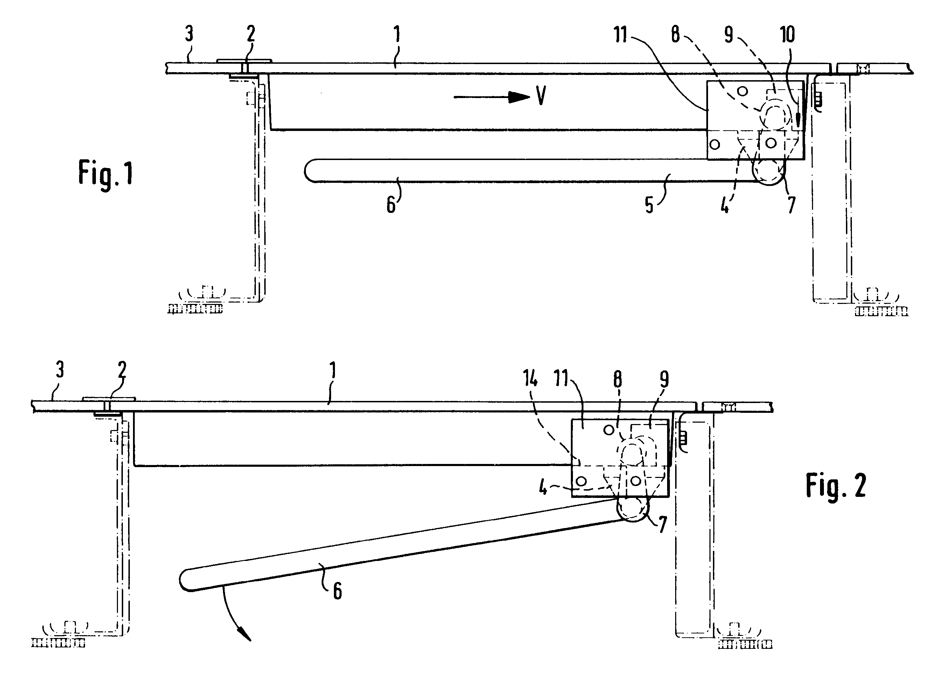

In der Darstellung nach Fig. 1 ist das Prinzip einer Vorrichtung zum Ver- und Entriegeln einer Klappe 1 abgebildet. Die Klappe 1 ist mit einem Scharnier 2 an der Fußbodenoberkante 3 eines Passagierdecks angelenkt und an der dem Scharnier 2 gegenüberliegenden Seite verriegelt.

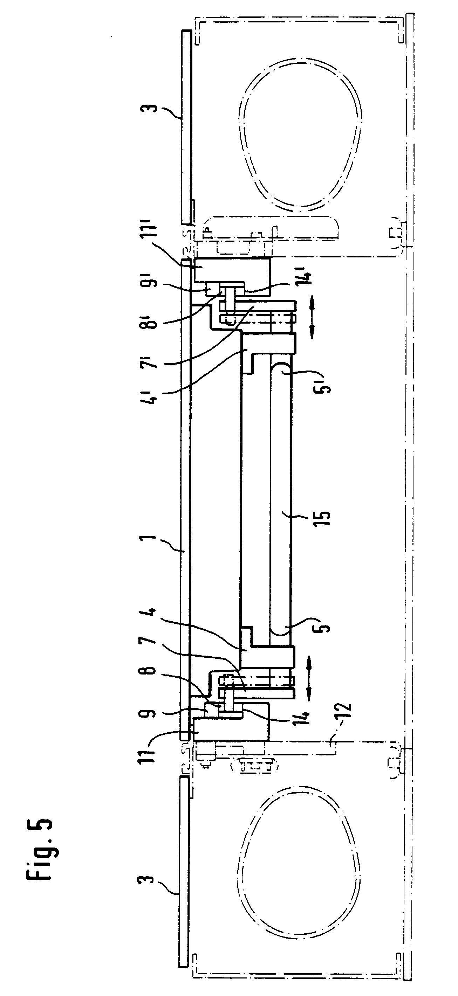

Hierzu ist auf der Unterseite der Klappe 1 ein Lagerbock 4 angebracht, in dem ein Winkelhebel 5 gelagert ist. Der längere Hebelarm 6 des Winkelhebels 5 ist als Handhabe ausgebildet, während der kürzere Hebelarm 7 an seinem Ende eine Rolle 8 aufweist. Diese Rolle 8 greift in der in Fig. 1 dargestellten Schließstellung in ein vorgespanntes, die Rolle 8 umfassendes Riegelelement 9 ein. Zur Erzeugung der in Fig. 1 als Pfeil 10 angedeuteten Vorspannung können Federelemente verwendet werden. Fig. 2 zeigt den Entriegelungsvorgang der Klappe 1, bei dem durch Schwenken des als Handhabe ausgebildeten Hebelarmes 6 das Riegelelement 9 gegen die Vorspannung soweit nachgibt, daß die Rolle 8 herausgerollt werden kann. Das Riegelelement 9 ist an einem Beschlag 11 im Klappenrahmen 12 befestigt (Fig. 5).

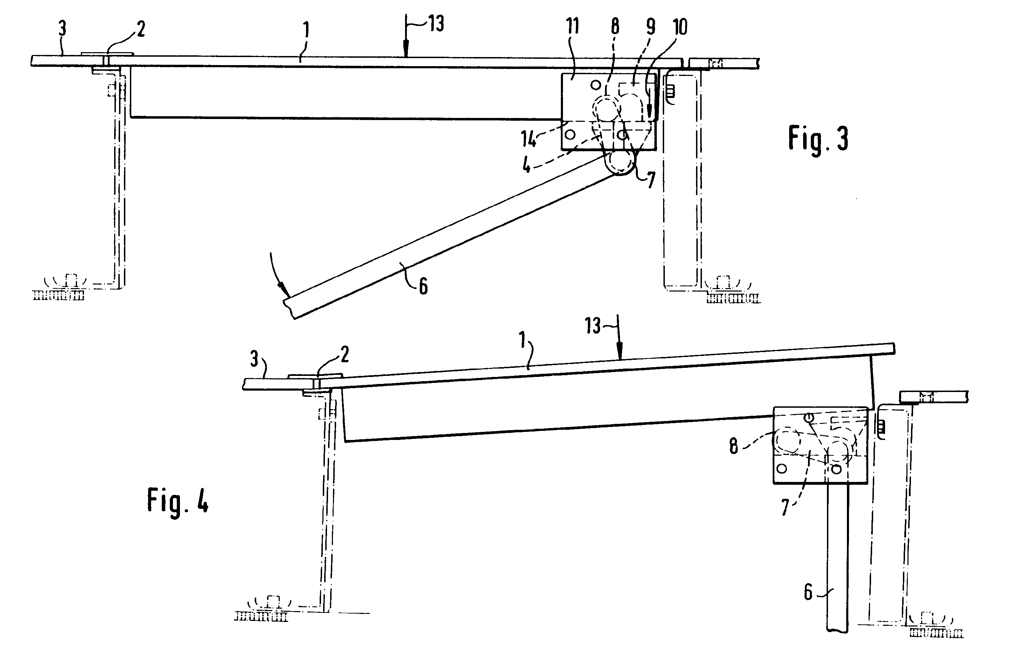

Wie die Darstellung nach Fig. 3 zeigt, befindet sich die Klappe 1 nach dem Entriegeln noch in der geschlossenen Lage, weil z.B. eine als Pfeil 13 angedeutete Last, das Öffnen behindert. Bei einem weiteren Schwenken des als Handhabe ausgebildeten Hebelarmes 6 rollt die Rolle 8 auf einer am Beschlag 11 vorgesehenen Stützkante 14 ab, so daß durch weiteres Schwenken des Hebelarmes 6 die in Fig. 4 dargestellte Öffnungsposi- tion erreichbar ist. Eine den Öffnungsvorgang behindernde Person wird hierdurch die Öffnungsabsicht feststellen und die Klappe 1 zum endgültigen Öffnen freigeben.

Wie aus der Ansicht nach Fig. 5 zu erkennen ist, sind zu beiden Seiten einer Klappe 1 je ein Winkelhebel 5,5′ angelenkt, deren längere Hebelarme 6,6′ zu einem Bügel 15 für eine gemeinsame Klappenverstellung vereinigt wird. Wie Fig. 5 zeigt, können die Hebelarme 7 auch seitlich versetzt werden, z.B. gegen Federkraft, so daß im Notfall auch ein Entriegeln und Öffnen der Klappe 1 unabhängig von der Handhabe 5, bzw. dem Bügel 15, erfolgen kann.

## Patentansprüche

1. Vorrichtung zum Ver- und Entriegeln einer schwenkbaren Klappe (1), vorzugsweise einer im Deck eines Passagierraumes einer Verkehrsflugzeuges angeordneten und zu einem Fracht- oder Aufenthaltsraum im Unterflurbereich führenden Klappe (1), in deren Bereich ein Lagerbock (4) mit einem daran angelenkten Winkelhebel (5) angeordnet ist und bei der ein Hebelarm (6) des Winkelhebels (5) als Handhabe ausgebildet ist, dadurch gekennzeichnet, daß der andere Hebelarm (7) an seinem Ende eine Rolle (8) aufweist, die in der Schließstellung in ein vorgespanntes, die Rolle (8) umfassendes Riegelelement (9) eingreift und beim Öffnen der Klappe (1) nach dem Überwinden der Riegelvorspannung an einer Stützkante (14) abrollbar ist und daß die Klappe (1) in den Passagierraum schwenkbar ist.

2. Vorrichtung nach Anspruch 1, dadurch gekennzeichnet, daß für die Vorspannung des Riegelelementes (9) ein Federelement eingesetzt ist.

3. Vorrichtung nach Anspruch 1 oder 2, dadurch gekennzeichnet, daß die Stützkante (14) an einem im Klappenrahmen angebrachten Beschlag (11) vorgesehen ist.

4. Vorrichtung nach einem der Ansprüche 1 bis 3, dadurch gekennzeichnet, daß die Handhaben zweier an den Seiten einer Klappe (1) angelenkten Winkelhebel (5,5′) zu einem Bügel (15) zur gemeinsamen Klappenverstellung vereinigt sind.

5. Vorrichtung nach einem der Ansprüche 1 bis 4, dadurch gekennzeichnet, daß der Hebelarm (7) seitlich zum Entriegeln der Klappe (1) ohne Handhabe (5) verschiebbar ist.

## Claims

1. Apparatus for locking and unlocking a pivotable flap (1), preferably a flap (1) arranged in the deck of a passenger cabin of a commercial aircraft and leading to a hold or service room in the underfloor section, wherein a bearing block (4) with an angle lever (5) hinged to it is arranged in the vicinity of the flap and an arm (6) of the lever (5) is shaped as a handle, characterised in that the other lever arm (7) has a roller (8) at its end, that in the closed position the roller engages in a prestressed locking element (9) surrounding it and when the flap (1) is opened and the prestressing of the lock has been overcome the roller can be rolled along a supporting edge (14), and that the flap (1) can be pivoted into the passenger cabin.

2. Apparatus according to claim 1, characterised in that a spring element is used for prestressing the locking element (9).

3. Apparatus according to claim 1 or 2, characterised in that the supporting edge (14) is provided on a fitting (11) mounted in the frame of the flap.

4. Apparatus according to any of claims 1 to 3, characterised in that the handles of two angle levers (5, 5′) hinged to the sides of a flap (1) are combined into a yoke (15) for joint displacement of the flap.

5. Apparatus according to any of claims 1 to 4, characterised in that the lever arm (7) can be displaced sideways to unlock the flap (1) without the handle (5).

## Revendications

1. Dispositif pour verrouiller et déverrouiller un volet pouvant pivoter (1), de préférence un volet (1) disposé dans le plancher d'une cabine de passagers d'un avion de transport et conduisant à une soute pour le fret ou à une cabine de séjour dans la zone inférieure de l'avion, dispositif dans la zone duquel est disposé un sabot d'appui (4) avec un levier coudé (5) articulé dessus et dans le cas duquel un bras (6) du levier coudé (5) est constitué comme poignée de manoeuvre, dispositif caractérisé en ce que l'autre bras de levier (7) présente à son extrémité un galet (8) qui vient en prise quand le volet est en position fermée dans un élément de verrouillage (9) précontraint, entourant le galet (8) et quand le volet (1) s'ouvre peut rouler sur un bord d'appui (14) après avoir surmonté la précontrainte de verrouillage et en ce que le volet (1) peut basculer dans la cabine des passagers.

2. Dispositif selon la revendication 1, caractérisé en ce que l'on monte, pour mettre en précontrainte l'élément de verrouillage (9), un élément élastique.

3. Dispositif selon la revendication 1 ou 2, caractérisé en ce que le bord d'appui (14) est prévu sur une armature (11) disposée dans le cadre du volet.

4. Dispositif selon l'une des revendications 1 à 3, caractérisé en ce que les poignées de deux leviers coudés articulés sur les côtés d'un volet (1) sont réunies de façon à former un étrier (15) servant en commun à manoeuvrer le volet.

5. Dispositif selon l'une des revendications 1 à 4, caractérisé en ce qu'on peut faire coulisser le bras de levier (7) latéralement pour déverrouiller le volet (1) sans la poignée (5).
